# EUROPEAN PATENT APPLICATION

(11) **EP 4 623 683 A1**
(43) Date of publication of application: **01.10.2025**
(21) Application number: 25166664.0
(22) Date of filing: 27.03.2025
(51) Int. Cl.: A01M 1/20, A01N 53/00

(54) **PESTICIDAL DEVICE AND DELIVERY METHOD THEREOF**

(30) Priority: 28.03.2024 IN 202421025678
(71) Applicant: Ross Lifescience USA Inc., Lorton, VA 22079 (US)
(72) Inventor: Nair, Pavana, 411026 Pune, Maharashtra (IN); Sridhar, Srinivasan, 411026 Pune, Maharashtra (IN); Potdar, Amol Arun, 411026 Pune, Maharashtra (IN); Seetharaman, Ekambaram, 411026 Pune, Maharashtra (IN); Kshirsagar, Rajendra Dattu, 411026 Pune, Maharashtra (IN)
(74) Representative: Epping - Hermann - Fischer

(57) **Abstract**

The present disclosure provides a pesticidal device for controlling indoor and outdoor pests. The pesticidal device (102) includes a longitudinal tube body (104) formed using a combustible material, where the longitudinal tube body (104) includes at least one of a proximal end (106a), and a distal end (106b); The pesticidal device (102) includes a pesticide composition loaded either on external surface, internal surface of the longitudinal tube body (104), where the longitudinal tube body (104) includes a hollow space (108) configured to load the pesticide composition. The pesticidal device (102) may or may not include a self-igniting head (110) to ignite the longitudinal tube body (104), where the longitudinal tube body (104) can be configured to release pesticidal ingredients in air upon igniting using the self-igniting head (110) or ignition mechanism for controlling a plurality of indoor and outdoor pests.

## Description

### FIELD OF THE INVENTION

The present disclosure relates generally to the field of pests repellent. Particularly, the present disclosure provides a pesticidal device and delivery method thereof for controlling a plurality of indoor and outdoor pests by releasing pesticidal ingredients in air upon igniting.

### BACKGROUND

The following description of the related art is intended to provide background information pertaining to the field of the present disclosure. This section may include certain aspects of the art that may be related to various features of the present disclosure. However, it should be appreciated that this section is used only to enhance the understanding of the reader with respect to the present disclosure, and not as admissions of the prior art.

Generally, mosquitoes, houseflies, and honeybees are examples of some common insects that live alongside humans. Further, the mosquitoes transmit a variety of pathogens that cause serious and life-threatening diseases in humans, such as malaria, dengue fever, yellow fever, filariasis, dengue, yellow fever, chikungunya, and, most recently, the Zika virus. Mosquito bites can cause skin irritation through an allergic reaction to the mosquito's saliva and causes a red bump and itching.

Numerous devices, products, agents, compositions, and formulations are commercially available, capable of repelling, killing, or reducing the number of mosquitoes in a premise. The conventional devices, products, agents, compositions, and formulations that primarily protects the humans from the dangerous mosquitoes are called mosquito repellants. In order to repel mosquitoes, a variety of synthetic chemical repellent agents are utilized in the conventional mosquito repellants, some of which may be resulted in a variety of negative side effects, such as allergies, inflammation, irritation or respiratory problems and others. However, the conventional mosquito repellants still suffer from certain limitations such as being expensive, ineffective, and exhibiting certain side-effects such as irritation, allergy, uneasiness, reduction in oxygen content, etc.

There is, therefore, a need in the art to develop new and improved pesticidal device that control various indoor and outdoor pests and overcome one or more problems associated with the conventional products thereof. The present invention satisfies the existing as well as other needs.

### OBJECTS

A primary object of the present disclosure is to provide a pesticidal device that overcomes one or more limitations associated with conventional products and devices.

Another object of the present disclosure is to provide a pesticidal device for repelling and/or reducing and/or controlling various indoor and outdoor pests.

Another object of the present disclosure is to provide a pesticidal device for repelling and/or reducing and/or controlling the population of mosquitoes.

Another object of the present disclosure is to provide a pesticidal device that exhibits high repellence and pesticidal activity.

Another object of the present disclosure is to provide a pesticidal device that releases pesticidal ingredients in air upon igniting.

Another object of the present disclosure is to provide a pesticidal device that reduces side effects such as irritation, allergy, uneasiness, reduction in oxygen content, etc.

Another object of the present disclosure is to provide a pesticidal device that is easy to manufacture and economical.

Another object of the present disclosure is to provide a pesticidal device that emits less smoke than any other available combustible products.

Other objects of the present invention will be apparent from the description of the invention herein below.

### SUMMARY

This summary is provided to introduce certain objects and aspects of the present disclosure in a simplified form that are further described below in the detailed description. This summary is not intended to identify the key features or the scope of the claimed subject matter.

The present disclosure relates generally to the field of pests repellent. More particularly, the present disclosure provides a pesticidal device for controlling a plurality of indoor and outdoor pests.

An aspect of the present disclosure relates to a pesticidal device for controlling indoor and outdoor pests, said pests pesticidal device includes a longitudinal tube body formed using a combustible material, where the longitudinal tube body includes at least one of a proximal end, and a distal end. The pesticidal device includes a pesticide composition loaded on at least one external surface, and an internal surface of the longitudinal tube body, where the longitudinal tube body includes a hollow space, where the hollow space can be configured to load the pesticide composition into the longitudinal tube body. The pesticidal device may or may not include a self-igniting head to ignite the longitudinal tube body, where the longitudinal tube body can be configured to release pesticidal ingredients in air upon igniting for controlling a plurality of indoor and outdoor pests.

In an aspect, the self-igniting head is positioned on the distal end of the longitudinal tube body.

In an aspect, the combustible material includes a paper material.

In an aspect, the pesticide composition is formulated into a liquid form, a powder form, or combinations thereof and stuffed or loaded on either external or internal surface of the longitudinal tube body.

In an aspect, the pesticide composition includes natural ingredients, natural and/ synthetic Pyrethroid compound and at least one excipient.

In an aspect, the plurality of indoor and outdoor pests are selected from the group consisting of arthropods such as insects, arachnids, centipedes, mosquitoes, houseflies, drain flies, Vespa spp. (Hornet), cockroaches, ants, bedbugs, spiders, mites, aphids, thrips, whiteflies, loopers, worms, beetles, leafrollers, moths, weevils including larvae and eggs.

Another aspect of the present disclosure relates to a method for controlling indoor and outdoor pests. The method includes the steps of forming a longitudinal tube body using a combustible material, where the longitudinal tube body includes at least one of a proximal end, and a distal end. The method includes the steps of loading a pesticide composition on at least one of an external surface, and an internal surface of the longitudinal tube body, where the longitudinal tube body includes a hollow space, where the hollow space can be configured to load the pesticide composition into the longitudinal tube body. The method includes the steps of igniting the longitudinal tube body employed with or without a self-igniting head for initiating combustion, where the longitudinal tube body can be configured to release pesticidal ingredients in air upon igniting for controlling a plurality of indoor and outdoor pests.

Various objects, features, aspects and advantages of the present disclosure will become more apparent from the following detailed description of preferred embodiments, along with the accompanying drawing figures in which like numerals represent like features.

Within the scope of this application, it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

### BRIEF DESCRIPTION OF THE DRAWINGS

In the figures, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an exemplary representation of the proposed pesticidal device 102 for controlling various indoor and outdoor pests, in accordance with an embodiment of the present disclosure.
FIG. 1B illustrates another exemplary representation of proposed pesticidal device, in accordance with an embodiment of the present disclosure.
FIG. 2 illustrates a flow diagram illustrating a method for controlling various indoor and outdoor pests, in accordance with an embodiment of the present disclosure.

### DETAILED DESCRIPTION

The embodiments herein and the various features and advantageous details thereof are explained more comprehensively with reference to the non-limiting embodiments that are detailed in the following description. Descriptions of well-known components and processing techniques are omitted so as to not unnecessarily obscure the embodiments herein. The examples used herein are intended merely to facilitate an understanding of the ways in which the embodiments herein may be practiced and to further enable those of skill in the art to practice the embodiments herein. Accordingly, the examples should not be construed as limiting the scope of the embodiments herein.

Unless otherwise specified, all terms used in disclosing the invention, including technical and scientific terms, have the meaning as commonly understood by one of ordinary skills in the art to which this invention belongs. By means of further guidance, term definitions may be included to better appreciate the teaching of the present invention.

As used in the description herein, the meaning of "a," "an," and "the" includes plural reference unless the context clearly dictates otherwise. Also, as used in the description herein, the meaning of "in" includes "in" and "on" unless the context clearly dictates otherwise.

As used herein, the terms "comprise", "comprises", "comprising", "include", "includes", and "including" are meant to be non-limiting, *i.e.*, other steps and other ingredients which do not affect the end of result can be added. The above terms encompass the terms "consisting of' and "consisting essentially of".

The terms 'pest' and 'insect' are used synonymously and interchangeably throughout the specification. The terms `pest' or 'insect' as used herein refers to any insect or small animal that is harmful or damages crops or livestock or otherwise interferes with the wellbeing of human beings such as spreading disease, causes destruction, or is otherwise a nuisance. The term 'pest' includes, but are not limited to: arthropods such as insects, arachnids, centipedes, mosquitoes, houseflies, drain flies, *vespa* spp. (hornet), cockroaches, ants, bedbugs, spiders, mites, aphids, thrips, whiteflies, loopers, worms, beetles, leafrollers, moths, weevils including larvae and eggs thereof, and reptiles such as lizards.

The term 'mosquito' or 'mosquitoes' as used herein refers to each and every species of mosquitoes reported in the literature. It includes both male and female mosquitoes. The term further includes them in their different stages of life cycles such as egg, larva, pupa, and adult.

The term 'controlling' as used herein refers to repelling, killing, preventing, and/or reducing the population of various indoor and outdoor pest(s) and/or insect(s).

The headings and abstract of the invention provided herein are for convenience only and do not interpret the scope or meaning of the embodiments.

The following discussion provides many example embodiments of the inventive subject matter. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

The present disclosure relates generally to the field of pests repellent. More particularly, the present disclosure provides a pesticidal device for controlling a plurality of indoor and outdoor pests.

The present disclosure is on the premise of a surprising discovery that when a pesticidal device is ignited, it releases pesticidal ingredients in atmosphere for controlling various indoor and outdoor pests. The pesticidal device is loaded with a pesticide composition, where the pesticide composition is loaded on at least one of an external surface, and an internal surface of the pesticidal device, and/or the pesticide composition is loaded into a hollow space of the pesticidal device where the pesticide composition includes natural ingredients, natural and/ synthetic Pyrethroid compound and at least one excipient. The pesticide composition exhibits exceptional functional reciprocity and synergistic activity, and affords dramatic improvement in controlling the population of various indoor as well as outdoor pests as compared to the individual ingredients and that too at a very low concentration.

An aspect of the present disclosure relates to a pesticidal device for controlling indoor and outdoor pests, said pests pesticidal device includes a longitudinal tube body formed using a combustible material, where the longitudinal tube body comprising at least one of a proximal end, and a distal end. The pesticidal device includes a pesticide composition loaded on at least one of an external surface, and an internal surface of the longitudinal tube body, where the longitudinal tube body includes a hollow space can be configured to load the pesticide composition into the longitudinal tube body. The pesticidal device may or may not include a self-igniting head to ignite the longitudinal tube body, where the longitudinal tube body can be configured to release pesticidal ingredients in air upon igniting for controlling a plurality of indoor and outdoor pests.

Another aspect of the present disclosure relates to a method for controlling indoor and outdoor pests. The method includes the steps of collecting a longitudinal tube body composed with a combustible material, where the longitudinal tube body includes at least one of a proximal end, and a distal end. The method includes the steps of loading a pesticide composition on at least one of an external surface, and internal surface of the longitudinal tube body, where the longitudinal tube body includes a hollow space which can be configured to load the pesticide composition into the longitudinal tube body. The method includes the steps of igniting the longitudinal tube body employed with or without a self-igniting head for initiating combustion, where the longitudinal tube body which can be configured to ignite using the self-igniting head 110 or an ignition mechanism, wherein the longitudinal tube body 104 can be configured to release pesticidal ingredients in air upon igniting for controlling a plurality of indoor and outdoor pests.

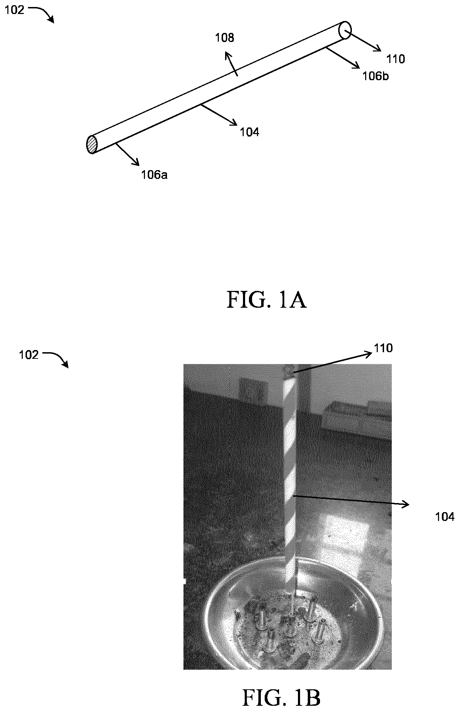

FIG. 1A illustrates an exemplary representation of the proposed pesticidal device 102 for controlling various indoor and outdoor pests, in accordance with an embodiment of the present disclosure.

In an embodiment, the proposed pesticidal device 102 can include a longitudinal tube body 104 which can be composed using a combustible material. The combustible material may include carrier wherein the carrier is but not limited to a paper material or paper format. The paper material may include, but not limited to, a bamboo paper, a rice paper, Copy Paper, Bond Paper, Cardstock, Glossy Paper, Matte Paper, Newsprint, Tissue Paper, Construction Paper, and the like. The longitudinal tube body 104 can include at least one of a proximal end 106a, and a distal end 106b. The pesticidal device 102 can include a pesticide composition loaded on at least one of an external surface, and an internal surface of the longitudinal tube body 104. The longitudinal tube body 104 can include a hollow space 108, which can be configured to load the pesticide composition into the longitudinal tube body 104. The pesticidal device 102 may or may not include a self-igniting head 110 can be configured to ignite the longitudinal tube body 104. The longitudinal tube body 104 can be configured to ignite using the self-igniting head 110 or an ignition mechanism. The ignition mechanism including but not limited to a piezoelectric igniter, where mechanical pressure generates an electric spark; a match, where friction ignites a chemical-coated surface; or a lighter, where a flint mechanism produces a spark upon striking, enabling combustion initiation to ignite the longitudinal tube body 104. The longitudinal tube body 104 can be configured to release pesticidal ingredients in air upon igniting for controlling a plurality of indoor and outdoor pests. The air can be present within at least one of, an ambience, a room, an area, a chamber, and the like. The plurality of indoor and outdoor pests are selected from the group consisting of arthropods such as insects, arachnids, centipedes, mosquitoes, houseflies, drain flies, Vespa spp. (Hornet), cockroaches, ants, bedbugs, spiders, mites, aphids, thrips, whiteflies, loopers, worms, beetles, leaf rollers, moths, weevils including larvae and eggs. The pesticidal device 102 may also be represented as a hollow stick, a paper straw, and the like.

In an embodiment, the pesticidal device 102 may be composed using the combustible material in various sizes, including diameters of 6 millimeters, 8 millimeters, and 10 millimeters.

In an embodiment, the self-igniting head 110 can be positioned on the at least one of the distal end 106b of the longitudinal tube body 104.

In an embodiment, the pesticide composition is formulated into a liquid form, a powder form, or combinations thereof and stuffed or loaded on either external or internal surface of the longitudinal tube body (104).

In an embodiment, the pesticide composition includes natural ingredients, natural and/ synthetic Pyrethroid compound and at least one excipient.

In an embodiment, the composition comprises: a whole of or a part of or an extract of or an oil of *Areca catechu.* In an embodiment, the composition comprises root, leaves, shoot, fruits, husk, seed, stem, bark sap, bud, or a combination thereof of *Areca catechu.* In an embodiment, the composition comprises fruits, husks, or a combination thereof of *Areca catechu.* In an embodiment, the composition comprises husk powder of *Areca catechu.*

In an embodiment, the composition comprises: a whole of or a part of or an extract of or an oil of *Pogostemon cablin.* In an embodiment, the composition comprises roots, leaves, twigs, flowers, seeds, or a combination thereof of *Pogostemon cablin*. In an embodiment, the composition comprises leaves or twigs of *Pogostemon cablin.* In an embodiment, the composition comprises an oil of *Pogostemon cablin.* In an embodiment, the composition comprises leaf oil of *Pogostemon cablin.*

In an embodiment, Camphor is synthetic Camphor.

In an embodiment, the Pyrethroid is selected from any or a combination of Allethrins, Bifenthrin, Cyfluthrin, Esfenvalerate, Cypermethrin, Cyphenothrin, Deltamethrin, Dimefluthrin, Esfenvalerate, Etofenprox, Fenpropathrin, Fenvalerate, Flucythrinate, Flumethrin, Imiprothrin, Lambda-Cyhalothrin, Metofluthrin, Pyrethrins, Permethrin, Phenothrin, Prallethrin, Resmethrin, Sumithrin (D-Phenothrin), Silafluofen, Tau-Fluvalinate, Tetramethrin, Tefluthrin, Tralomethrin and Transfluthrin. In an embodiment, the Pyrethroid is Transfluthrin. In an embodiment, the Pyrethroid is Metofluthrin.

In an embodiment, the excipient is selected from any or a combination of a perfume, a preservative, an adhesive, a smoldering agent, a burning aid, a binder, a filler, a burnable base, a propellant, a solvent, a wetting agent, a solubilizer, a hardening agent, an emulsifier, a diluent, a lubricant, a colouring agent, a lower alcohol, and a neutralization base.

In an embodiment, the perfume(s)/fragrance agent include, but are not limited to: various naturally or commercially available orange oil, lemon oil, lavender oil, peppermint oil, eucalyptus oil, citronella oil, lime oil, yuzu oil, jasmine oil, cypress oil, green tea essential oil, limonene, α-pinene, linalool, geraniol, phenylethyl alcohol, amylcinnamic aldehyde, cuminaldehyde, benzyl acetate, Pure Soul MMN37683, Classic Guggul MMN37681, Lemony perfume, and combinations thereof. However, a person skilled in the art would appreciate that any other perfume(s) can be utilized to serve the intended purpose.

In an embodiment, the preservative(s) include, but are not limited to: sodium benzoate, potassium sorbate, phenoxyethanol, p-hydroxybenzoic acid esters, sorbic acid, benzoic acid, propionic acid or salts, Butylated Hydroxytoluene (BHT), and combinations thereof. However, a person skilled in the art would appreciate that any other preservative(s) can be utilized to serve the intended purpose.

In an embodiment, the adhesive(s) include, but are not limited to: Joss (Jiggit powder), corn starch, wheat starch, potato starch, pea starch, Tamarind starch, etc. However, a person skilled in the art would appreciate that any other adhesive(s) can be utilized to serve the intended purpose.

In an embodiment, the smoldering agent(s) or burning aid(s) include, but are not limited to: potassium nitrate (KNO₃), sodium nitrate (NaNO₃), potassium chloride, and combinations thereof. However, a person skilled in the art would appreciate that any other smoldering agent(s) or burning aid(s) can be utilized to serve the intended purpose.

In an embodiment, the binder(s) include, but are not limited to: guar gum, starch, for example, potato starch, maize starch, corn starch, tamarind seed powder, water, povidone, copovidone, kaolin and combinations thereof. However, a person skilled in the art would appreciate that any other binder(s) can be utilized to serve the intended purpose.

In an embodiment, the filler(s) or burnable base(s) or a thickener include, but are not limited to: Aerosil 200, Paraffin wax, sawdust powder, Joss (Jiggit powder), coconut shell powder, wood powder, wood chips, wood fiber, wood charcoal, vegetable shell powders, for e.g. cocoa shell, peanut shell, fibrous waste, for e.g. rayon waste, cotton waste, waste paper and mineral fibers, and combinations thereof. However, a person skilled in the art would appreciate that any other filler(s) or burnable base(s) can be utilized to serve the intended purpose.

In an embodiment, the propellant(s) include, but are not limited to: liquefied petroleum gas (LPG), dimethyl ether (DME), nitrogen gas, carbonic acid gas, nitrous oxide, compressed air, and combinations thereof. However, a person skilled in the art would appreciate that any other propellant(s) can be utilized to serve the intended purpose.

In an embodiment, the solvent(s) include, but are not limited to: hydrocarbons such as aliphatic hydrocarbon (C₅ to C₂₀ carbon atoms having branched and/or unbranched chains), aromatic hydrocarbon and alicyclic hydrocarbon, alcohols such as ethanol, isopropanol (isopropyl alcohol) and methanol, esters such as fatty acid ester, vegetable oils, animal oils, and water. Further, among the aliphatic hydrocarbons, a paraffinic hydrocarbon (linear or branched saturated hydrocarbon), *inter alia*, normal paraffin (n-paraffin) is preferably used. It further includes higher fatty acid esters and alcohols. It further includes D-80, D-100, or a mixture thereof in the required amount. Preferable examples of organic solvents include higher fatty acid esters and alcohols. The higher fatty acid ester preferably has 16 to 20 carbon atoms in total. Examples of such a higher fatty acid ester include isopropyl myristate, butyl myristate, hexyl laurate, isopropyl palmitate, and combinations thereof. However, a person skilled in the art would appreciate that any other solvent(s) can be utilized to serve the intended purpose.

In an embodiment, the wetting agent(s) include, but are not limited to: 1,2-propylene glycol, glycerol, hyaluronate sodium, and combinations thereof. However, a person skilled in the art would appreciate that any wetting agent(s) can be utilized to serve the intended purpose.

In an embodiment, solubilizer(s) include, but are not limited to: isomeryl alcohol APEO, PEG-40 PEG-60, polysorbas20, the Tween 80, and combinations thereof. However, a person skilled in the art would appreciate that any other solubilizer(s) can be utilized to serve the intended purpose.

In an embodiment, hardening agent(s) include, but are not limited to: water-miscible sylvite, sodium salt, magnesium salts, calcium salt, and combinations thereof. However, a person skilled in the art would appreciate that any other hardening agent(s) can be utilized to serve the intended purpose.

In an embodiment, the emulsifier(s) include, but are not limited to: hydrogenated lecithin, C12-16 Alcohols, palmitic acid (e.g., Biophillic^{™} H) and cetyl alcohol, glyceryl stearate, PEG-75 stearate, ceteth-20, steareth-2 (Emulium^{®} Delta), Tween (Tween 20, Tween 40, Tween 60 and Tween 80) and combinations thereof. However, a person skilled in the art would appreciate that any other emulsifier (s) can be utilized to serve the intended purpose.

In an embodiment, the diluent(s) include, but are not limited to: microfine cellulose, lactose, starch, pregelatinized starch, calcium carbonate, calcium sulphate, sugar, dextrates, dextrin, dextrose, dibasic calcium phosphate dihydrate, tribasic calcium phosphate, kaolin, magnesium carbonate, magnesium oxide, maltodextrin, mannitol, potassium chloride, powdered cellulose, sodium chloride, sorbitol, talc, and combinations thereof. However, a person skilled in the art would appreciate that any other diluent(s) can be utilized to serve the intended purpose.

In an embodiment, the lubricant(s) include, but are not limited to: zinc stearate, magnesium stearate, stearic acid, calcium stearate, Vegetable stearin, and combinations thereof. However, a person skilled in the art would appreciate that any other lubricant(s) can be utilized to serve the intended purpose.

In an embodiment, the colouring agent(s) include, but are not limited to: E102 Tartrazine, E104 Quin- oline Yellow, E110 Sunset Yellow FCF, E120 - Cochineal, carminic acid, Carmines, E122 Azorubine (Carmoisine), E123 Amaranth, E124 Ponceau 4R (Cochineal Red A), E127 Erythrosine, E129 Allura Red, E131 Patent Blue, and combinations thereof. However, a person skilled in the art would appreciate that any other colouring agent(s) can be utilized to serve the intended purpose.

In an embodiment, lower alcohol(s) include, but are not limited to: ethanol, ethylene glycol, propane diols, glycerin, butanediol, and combinations thereof. However, a person skilled in the art would appreciate that any other lower alcohol(s) can be utilized to serve the intended purpose.

In an embodiment, the neutralization base(s) include, but are not limited to: triethanolamine. However, a person skilled in the art would appreciate that any other neutralization base(s) can be utilized to serve the intended purpose.

While one or more embodiments of the present disclosure enumerates and describes a list of excipients that may be used in the composition to serve an intended purpose, it should be appreciated that one or more excipient(s) may also serve more than one function, obviating the need of inclusion of separate excipients for the specified purpose. Although several embodiments of the present disclosure name a few of the commonly used excipients, any other excipient(s) known to or appreciated by a skilled person can also be used to realize the advantageous compositions of the present disclosure.

The ingredients of the compositions/formulations of the present disclosure exhibit functional reciprocity there between, and accordingly aid in repelling, killing, preventing, and/or reducing the population of indoor as well as outdoor pests. The composition of the present disclosure also provides a pleasant aroma by releasing different fragrances to give an aromatherapy effect while knocking down harmful pests.

In an embodiment, the composition is formulated into a liquid form, a powder form, or combinations thereof.

The composition according to the present disclosure is a self-combusting powder, that is, it burns completely without the need for a wick, producing smoke where, it has a higher density than air and is heavy. In an embodiment, the powder formulation can be loaded into the longitudinal tube body 104 of the pesticidal device 102.

In an embodiment, the self-ignite formulations are delivered through various conventional devices, for example, a device that may contain an ignitable material such as potassium nitrate, and the like, that may lead to fire flame after being stroked against a striking surface (made up of materials such as sand, powdered glass, red phosphorus and the like). In an embodiment, in such devices for e.g. a match head is dragged along the striking surface, the sand and powdered glass cause friction and heat, which is enough to convert some of the red phosphorous to white phosphorus, a volatile chemical that immediately ignites upon coming in contact of the air and, hence, act as a source of smoldering for a pesticide composition loaded in the pesticidal device.

FIG. 1B illustrates another exemplary representation of proposed pesticidal device, in accordance with an embodiment of the present disclosure.

In an embodiment, the proposed pesticidal device 102 can include the longitudinal tube body 104 formed using the combustible material. The combustible material may include, but not limited to a paper material. The longitudinal tube body 104 can include at least one of the proximal end 106a, and the distal end 106b. The pesticidal device 102 can include the pesticide composition which is loaded into the longitudinal tube body 104. The longitudinal tube body 104 can include the hollow space 108 which enables to load the pesticide composition. The pesticidal device 102 may or may not include the self-igniting head 110 which can be configured to ignite the longitudinal tube body 104. The longitudinal tube body 104 can be configured to release pesticidal ingredients in air upon igniting for controlling the plurality of indoor and outdoor pests. The plurality of indoor and outdoor pests are selected from the group consisting of arthropods such as insects, arachnids, centipedes, mosquitoes, houseflies, drain flies, Vespa spp. (Hornet), cockroaches, ants, bedbugs, spiders, mites, aphids, thrips, whiteflies, loopers, worms, beetles, leafrollers, moths, weevils including larvae and eggs. In an embodiment, the dimensions of the pesticidal device may include, but is not limited to, a Diameter of 0.5cm, and a Length of 20cm.

In an exemplary embodiment, the pesticidal device 102 can include the longitudinal tube body 104 formed using the combustible material. The combustible material may include, but not limited to a paper material. The paper material may include, but not limited to, a bamboo paper, a rice paper, and the like. The pesticide composition may be loaded on a surface of the longitudinal tube body 104. The combustible material may be configured to absorb the pesticide composition which is loaded on at least one of an external surface, and an internal surface of the longitudinal tube body 104. The pesticidal device 102 may or may not include the self-igniting head 110 which can be configured to ignite the longitudinal tube body 104. The longitudinal tube body 104 can be configured to release pesticidal ingredients in air upon igniting using the self-igniting head 110 or an ignition mechanism for controlling the plurality of indoor and outdoor pests. The plurality of indoor and outdoor pests are selected from the group consisting of arthropods such as insects, arachnids, centipedes, mosquitoes, houseflies, drain flies, Vespa spp. (Hornet), cockroaches, ants, bedbugs, spiders, mites, aphids, thrips, whiteflies, loopers, worms, beetles, leafrollers, moths, weevils including larvae and eggs. In an embodiment, the dimensions of the pesticidal device 102 may include, but is not limited to, a Diameter of 0.5cm, and a Length of 20cm.

In an embodiment, the pesticidal device 102 can include the longitudinal tube body 104 formed using a paper which can absorb liquid formulation.

In an embodiment, the pesticide composition may include Patchouli, camphor, and pyrethroids may be loaded on the surface of the paper. However, Areca powder can be stuffed in the hollow space 108 of the longitudinal tube body 104.

### EXAMPLES

### EXAMPLE 1

### Paper straw stuffed with ARECA CATECHU

**TABLE 1: Paper straw stuffed with Areca catechu**

| **Sr. No.** | **Ingredients** | **Role in formulation** | **Amount in wt. %** |
|---|---|---|---|
| **1** | *Areca catechu* | Pesticide/ burnable filler | 80 |
| **2** | Isopropyl alcohol | Binder | 10.7 |
| **3** | Lemon global Perfume | Fragrance | 1 |
| **4** | Sodium benzoate | Preservative | 0.3 |
| **5** | Potassium nitrate | Smoldering agent | 8 |
| | Total | | 100 |

All the ingredients were weighed accurately as per Table 1 above, wherein potassium nitrate (2%) and sodium benzoate and perfume were dissolved in isopropyl alcohol and loaded on paper for proper burning with good smell. Remaining raw materials viz. Areca catechu powder and crystals of Potassium nitrate (6%) mixed properly and stuffed into the paper straw (Empty paper straw weight of 1.3g). Potassium nitrate percentage in above table is split in two parts for uniform burning of paper as well as stuffed anti-mosquito plant powder. Manufactured stuffed paper straw is fixed on the stand and smoldered to create smoke for controlling various indoor and outdoor pests.

### PAPER STRAW DEVICE MADE WITH POGOSTEMON CABLIN PESTICIDE

**TABLE 2: Paper straw device made by using Pogostemon cablin**

| **Sr. No.** | **Ingredients** | **Role in formulation** | **Amount in wt. %** |
|---|---|---|---|
| **1** | *Pogostemon cablin* | Pesticide | 1.9 |
| **2** | Isopropyl alcohol | Solvent | 78.6 |
| **3** | Lemon global Perfume | Fragrance | 1 |
| **4** | Sodium benzoate | Preservative | 0.3 |
| **5** | Potassium nitrate | Smoldering agent | 2.0 |
| **6** | Paper straw | Current Device | 16.3 |
| | Total | | 100 |

All the ingredients were weighed accurately as per **Table 2** above, wherein *Pogostemon cablin,* sodium benzoate, Potassium nitrate and Lemon global perfume were dissolved in Isopropyl alcohol to obtain a liquid mixture, and the said mixture was loaded onto a paper straw. Manufactured dry device is smoldered to release smoke useful for controlling various indoor and outdoor pests.

### PAPER STRAW DEVICE MADE WITH TRANSFLUTHRIN PESTICIDE

**TABLE 3: Paper straw device made by using Transfluthrin**

| **Sr. No.** | **Ingredients** | **Role in formulation** | **Amount in wt. %** |
|---|---|---|---|
| **1** | Transfluthrin | Pesticide | 0.1 |
| **2** | Isopropyl alcohol | Solvent | 80.4 |
| **3** | Lemon global Perfume | Fragrance | 1 |
| **4** | Sodium benzoate | Preservative | 0.3 |
| **5** | Potassium nitrate | Smoldering agent | 2.0 |
| **6** | Paper straw | Current Device | 16.3 |
| | Total | | 100 |

All the ingredients were weighed accurately as per **Table 3** above, wherein Transfluthrin, sodium benzoate, Potassium nitrate and Lemon global perfume were dissolved in Isopropyl alcohol to obtain a liquid mixture, and the said mixture was loaded onto a paper straw. Manufactured dry device is smoldered to release smoke useful for controlling various indoor and outdoor pests.

### EFFICACY STUDY

The paper straw device realized in Table 1-3 with individual active ingredient(s) viz, (*Areca catechu, Pogostemon cablin* and Transfluthrin were subjected to efficacy studies, particularly, mosquitocidal activity. The mosquitocidal activity was determined by using a Peet Grady Chamber (having its size/volume ~5.83m³). During experimentation, the holes, door, and small window, all were in closed condition. For consistency and reproducibility of results, the environmental conditions viz. temperature of 27±3°C and Relative Humidity of about 50-80% were maintained. Before evaluating the mosquitocidal activity the *Culex quinquefasciatus* mosquitoes were first introduced into the chamber, and decontamination checks were performed for the first ½ hour. If no knockdown of mosquito(es) was seen, then a fresh lot (100 nos.) of *Culex quinquefasciatus* mosquitoes (Male and Female mosquitoes in a ratio of 1:1) was introduced, and a single paper straw format with individual active ingredients was burnt in the Peet Grady chamber, and the experiments were conducted respectively. The knockdown of insects was observed every 5 minutes for about 60 minutes. Thereafter, the knocked-down mosquitoes were transferred to a clean container with food of 10% sucrose contained in a cotton swab. The mortality readings were noted after 24 hours. Observations were interpreted in Knock-down times, KT₅₀ and KT₉₀ [KT₅₀ is the time (in minutes) needed to knock down 50% of the mosquito population used for an experiment, and KT₉₀ is the time (in minutes) needed to knock down 90% of the mosquito population used for an experiment] and it is determined by the Probit analysis software.

**Table 4: Comparison of the mosquitocidal activity of Paper straw formulation from individual active ingredient(s)**

| **Formulations** | **Pesticide Used** | **Source** | **KT₅₀ (Minutes)** | **KT₉₀ (Minutes)** |
|---|---|---|---|---|
| **Table No. 1 Formulation** | Areca Nut Powder | Natural | 71 | 149 |
| **Table No. 2 Formulation** | Pogostemon cablin leaf essential oil | Natural | 19 | 37 |
| **Table No. 3 Formulation** | Transfluthrin | Synthetic | 8 | 15 |

| | | | | |
|---|---|---|---|---|
| Bio-efficacy in Peet Grady Chamber by burning single paper straw. | | | | |

As can be seen in Table 4 above, the paper straw device prepared with different natural as well as synthetic moieties (Table 1 to 3) are useful for control of mosquitoes.

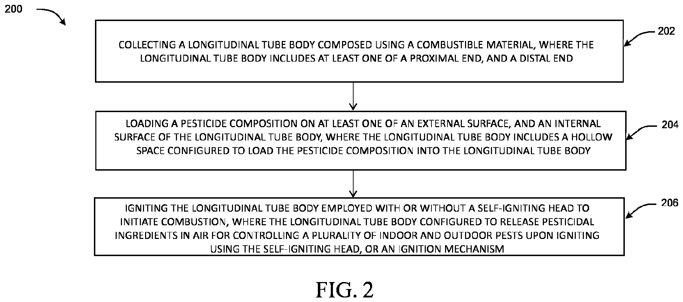

FIG. 2 illustrates a flow diagram illustrating a method for controlling various indoor and outdoor pests, in accordance with an embodiment of the present disclosure.

As illustrated, the method (200) includes, at block (202), collecting a longitudinal tube body composed with a combustible material, where the longitudinal tube body includes at least one of a proximal end, and a distal end.

Continuing further, the method (200) includes, at block (204), loading a pesticide composition into at least one of an external surface and an internal surface of the longitudinal tube body, where the longitudinal tube body includes a hollow space configured to load into the longitudinal tube body.

Continuing further, the method (200) includes, at block (206), igniting the longitudinal tube body employed with or without a self-igniting head for initiating combustion, where the longitudinal tube body which is configured to ignite using the self-igniting head or an ignition mechanism, where the longitudinal tube body can be configured to release pesticidal ingredients in air upon igniting for controlling a plurality of indoor and outdoor pests.

Where the specification claims refer to at least one of something selected from the group consisting of A, B, C ....and N, the text should be interpreted as requiring only one element from the group, not A plus N, or B plus N, etc. While the foregoing describes various embodiments of the proposed disclosure, other and further embodiments of the proposed disclosure may be devised without departing from the basic scope thereof. The scope of the proposed disclosure is determined by the claims that follow. The proposed disclosure is not limited to the described embodiments, versions or examples, which are included to enable a person having ordinary skill in the art to make and use the invention when combined with information and knowledge available to the person having ordinary skill in the art.

### ADVANTAGES

The present disclosure provides a pesticidal device that overcomes the limitations associated with conventional compositions/formulations.

The present disclosure provides a pesticidal device for repelling and/or reducing and/or controlling various indoor and outdoor pests.

The present disclosure provides a pesticidal device which is loaded with a pesticide composition/formulation for repelling and/or reducing and/or controlling the population of mosquitoes.

The present disclosure provides a pesticidal device that releases pesticidal ingredients in air upon igniting.

The present disclosure provides a pesticidal device that exhibits high repellence and pesticidal activity.

The present disclosure provides a pesticidal device that is safe and free of side-effects such as irritation, allergy, uneasiness, reduction in oxygen content, etc.

## Claims

1. A pesticidal device for controlling indoor and outdoor pests, wherein said pesticidal device (102) comprises:
a longitudinal tube body (104) formed using a combustible material, wherein the longitudinal tube body (104) comprising at least one of a proximal end (106a), and a distal end (106b);
a pesticide composition loaded on at least one of an external surface, and an internal surface of the longitudinal tube body (104), wherein the longitudinal tube body (104) comprising a hollow space (108), wherein the hollow space (108) configured to load the pesticide composition into the longitudinal tube body (104); and
the longitudinal tube body (104) is employed with or without a self-igniting head (110), or without the self-igniting head to initiate combustion, wherein the longitudinal tube body (104) configured to ignite using the self-igniting head (110) or an ignition mechanism, wherein the longitudinal tube body (104) configured to release pesticidal ingredients in air upon igniting for controlling a plurality of indoor and outdoor pests.

2. The device (102) as claimed in claim 1, wherein the self-igniting head (110) is positioned on the at least one of the distal end (106b) of the longitudinal tube body (104).

3. The device (102) as claimed in claim 1, wherein the combustible material comprising a paper material configured to absorb the pesticide composition loaded on the longitudinal tube body (104).

4. The device (102) as claimed in claim 1, wherein the pesticide composition is formulated into a liquid form, a powder form, or combinations thereof and stuffed or loaded on either external or internal surface of the longitudinal tube body (104).

5. The device (102) as claimed in claim 1, wherein the pesticide composition comprising natural ingredients, natural and/ synthetic Pyrethroid compound and at least one excipient.

6. The device (102) as claimed in claim 1, wherein the plurality of indoor and outdoor pests are selected from the group consisting of arthropods such as insects, arachnids, centipedes, mosquitoes, houseflies, drain flies, *Vespa* spp. (Hornet), cockroaches, ants, bedbugs, spiders, mites, aphids, thrips, whiteflies, loopers, worms, beetles, leafrollers, moths, weevils including larvae and eggs.

7. A method for controlling indoor and outdoor pests, wherein said method (200) comprises:
collecting (202), a longitudinal tube body (104) composed with a combustible material, wherein the longitudinal tube body (104) comprising at least one of a proximal end (106a), and a distal end (106b);
loading (204), a pesticide composition on at least one of an external surface, and an internal surface of the longitudinal tube body (104), wherein the longitudinal tube body (104) comprising a hollow space (108) configured to load the pesticide composition into the longitudinal tube body (104) ; and
igniting (206), the longitudinal tube body (104) employed with or without self-igniting head to initiate combustion, wherein the longitudinal tube body (104) configured to ignite using the self-igniting head (110) or an ignition mechanism, wherein the longitudinal tube body (104) configured to release pesticidal ingredients in air upon igniting for controlling a plurality of indoor and outdoor pests.

8. The method (200) as claimed in claim 7, wherein the pesticide composition is formulated into a liquid form, a powder form, or combinations thereof and stuffed or loaded on either external or internal surface of the longitudinal tube body (104).

9. The method (200) as claimed in claim 7, wherein the pesticide composition comprising at least one of natural ingredients, natural and/ synthetic Pyrethroid compound and at least one excipient.

10. The method (200) as claimed in claim 7, wherein the plurality of indoor and outdoor pests are selected from the group consisting of arthropods such as insects, arachnids, centipedes, mosquitoes, houseflies, drain flies, *Vespa* spp. (Hornet), cockroaches, ants, bedbugs, spiders, mites, aphids, thrips, whiteflies, loopers, worms, beetles, leafrollers, moths, weevils including larvae and eggs.
